## Europäisches Patentamt

(19) **European Patent Office**

**Office européen des brevets**

(11) Numéro de publication: **0 275 791**
**B1**

(12) ## FASCICULE DE BREVET EUROPEEN

(45) Date de publication du fascicule du brevet:
25.07.90

(51) Int. Cl.⁵: **F16C 39/06**

(21) Numéro de dépôt: **87402984.6**

(22) Date de dépôt: **24.12.87**

(54) **Dispositif électromagnétique de réduction des vibrations dans une machine tournante équipée de paliers fluides.**

(30) Priorité: **31.12.86  FR 8618440**

(43) Date de publication de la demande:
**27.07.88 Bulletin 88/30**

(45) Mention de la délivrance du brevet:
**25.07.90 Bulletin 90/30**

(84) Etats contractants désignés:
**CH DE GB IT LI SE .**

(56) Documents cités:
**DE-A- 2 905 973**
**US-A- 4 339 780**

(73) Titulaire: **SOCIETE DE MECANIQUE MAGNETIQUE,**
**B.P. 2282- 2 rue des Champs, F-27950 Saint-Marcel(FR)**

(72) Inventeur: **Habermann, Helmut, 63 Rue de Bizy,**
**F-27200 Vernon(FR)**

(74) Mandataire: **Thévenet, Jean-Bruno et al, Cabinet BEAU**
**DE LOMENIE 55 rue d'Amsterdam, F-75008 Paris(FR)**

## Description

La présente invention a pour objet un dispositif électromagnétique de réduction des vibrations dans une machine tournante comprenant un rotor monté par l'intermédiaire d'au moins un palier fluide à l'intérieur d'un bâti.

Un palier fluide, c'est-à-dire un palier à huile ou à gaz et en particulier un palier hydrodynamique tend à transmettre au bâti une force proportionnelle d'une part à la raideur du palier et d'autre part à l'excentrement défini par la distance entre l'axe d'inertie du rotor et l'axe du palier. Or, quelle que soit la qualité de l'équilibrage du rotor, le balourd ne peut être complètement éliminé. La force transmise au bâti tend ainsi à créer au niveau de celui-ci des vibrations qui dans de nombreux cas s'avèrent préjudiciables à l'environnement dans lequel se trouve la machine tournante.

Pour remédier à cet inconvénient, on a déjà proposé de compenser les forces exercées sur le bâti d'une machine par un palier hydrodynamique en utilisant des excitateurs électrodynamiques qui exercent sur le bâti un amortissement actif tendant à réduire l'action des forces exercées par le palier hydrodynamique. Un tel dispositif qui agit directement sur la structure à stabiliser n'est pas pleinement satisfaisant car son action ne permet pas d'éviter des vibrations résiduelles et les forces tournantes dues au balourd créées sur le bâti par le palier hydrodynamique agissent non seulement pour la fréquence de rotation du rotor, mais à des fréquences multiples de celle-ci, ce qui rend la compensation d'autant plus difficile.

Du document US-A 4 339 780 est connu un dispositif pour amortir les vibrations linéaires, où l'on fait vibrer une masse en opposition de phase avec un dispositif électromagnétique actif.

On connait également dans le document de brevet US-A 4 626 754 un dispositif de réduction des vibrations des machines tournantes applicable dans le cas où le rotor est monté sur le bâti à l'aide d'une suspension magnétique active comprenant au moins un palier magnétique radial. Selon ce dispositif, des détecteurs de vibration disposés sur le bâti permettent, par l'intermédiaire des circuits d'asservissement des paliers magnétiques actifs, de réduire les vibrations auxquelles est soumis le bâti. Une telle suspension magnétique active du rotor pourrait donc être juxtaposée à une suspension à paliers fluides pour compenser, par la raideur négative des paliers magnétiques, les forces perturbatrices créées par les paliers fluides. Cette solution présente cependant des inconvénients du fait qu'elle ne peut empêcher l'apparition sur le stator de couples parasites dus à la juxtaposition de paliers magnétiques et de paliers fluides décalés axialement et surtout du fait qu'elle exige des paliers magnétiques puissants capables de compenser non pas la force centrifuge du balourd, mais la force nécessaire pour faire tourner le rotor autour de son axe d'inertie plutôt qu'autour de l'axe du palier fluide, laquelle force est proportionnelle à la distance entre les deux axes et à la raideur du palier fluide, laquelle raideur est elle-même toujours très élevée. De plus, il est nécessaire de compenser les harmoniques susceptibles d'apparaître à cause de la charge dynamique du palier fluide.

La présente invention vise à remédier aux inconvénients des dispositifs de l'art antérieur et à permettre de réduire efficacement et même annuler les vibrations susceptibles d'être engendrées sur le bâti d'une machine tournante du fait de la présence d'un palier fluide de support du rotor de la machine.

Ces buts sont atteints grâce à un dispositif électromagnétique de réduction des vibrations dans une machine tournante comprenant un rotor monté par l'intermédiaire d'au moins un palier fluide à l'intérieur d'un bâti, caractérisé en ce qu'il comprend au moins un anneau de compensation placé au voisinage du palier fluide et monté par rapport au rotor à l'aide d'au moins un palier magnétique actif radial dont les enroulements d'électro-aimants sont alimentés en fonction d'une part des signaux délivrés par un détecteur de la position de l'anneau de compensation par rapport au rotor et d'autre part des signaux délivrés par au moins deux détecteurs de vibration disposés sur le bâti de la machine et présentant des axes de sensibilité non parallèles perpendiculaires à l'axe du rotor, en ce que les signaux délivrés par les détecteurs de vibration sont appliqués à une chaîne de contre-réaction sélective à bande étroite et à grand gain dont la fréquence centrale est synchronisée avec une fréquence de référence fo et qui comprend des moyens pour intégrer les signaux issus des détecteurs de vibration et des moyens de filtrage pour supprimer les signaux transitoires dont la fréquence n'est pas liée à la fréquence de référence fo, de telle sorte que l'anneau de compensation exerce sur le rotor par l'intermédiaire du palier magnétique radial une force tournante de compensation égale à la force centrifuge due au balourd générée sur le rotor mais en présentant un déphasage de 180° par rapport cette dernière.

La masse de l'anneau de compensation est très inférieure à la masse du rotor et de préférence de l'ordre de quelques pour cents de celle-ci.

Selon un mode de réalisation avantageux, le dispositif comprend au moins trois tiges de liaison parallèles à l'axe du rotor et présentant une grande raideur axiale pour relier l'anneau de compensation au bâti.

Selon un autre mode de réalisation, le dispositif comprend un anneau de compensation monté par rapport au rotor à l'aide de deux paliers magnétiques actifs radiaux et coopérant par rapport au bâti à l'aide d'un palier magnétique axial actif.

Suivant une caractéristique particulière de l'invention, le dispositif comprend en outre au moins deux capteurs de vibration à axes non parallèles entre eux et perpendiculaires à l'axe du rotor, disposés sur l'anneau de compensation, les signaux délivrés par ces détecteurs de vibration sont appliqués à une chaîne de contre-réaction comprenant des réseaux d'action proportionnelle et dérivée et reliée aux enroulements d'électroaimants du palier magnétique actif, la chaîne de contre-réaction reliant le détecteur de détection de la position de l'anneau de compensation aux enroulements d'électroaimants du palier magnétique actif comprend un simple réseau d'action intégrale.

D'une manière générale, la présence d'un anneau de compensation de relativement faible masse monté par rapport au rotor à l'aide d'au moins un palier magnétique actif, permet, à l'aide d'un palier magnétique de faible puissance, d'atteindre l'immobilité du bâti en annulant à leur source les forces émises par le rotor. Il en résulte qu'aucune force dynamique n'est transmise au bâti par le palier fluide, que la raideur de celui-ci n'est pas modifiée par une variation de l'entrefer et qu'aucune perturbation harmonique de la fréquence de rotation du rotor n'est créée dans le bâti du fait du palier fluide. Le dispositif selon l'invention qui, en quelque sorte, étouffe dans l'oeuf les perturbations naissantes, peut ainsi avoir une efficacité très grande.

D'autres caractéristiques et avantages de l'invention ressortiront de la description suivante de modes particuliers de réalisation de l'invention, donnés à titre d'exemple en référence aux dessins annexés sur lesquels :

- la figure 1 est une vue schématique montrant les éléments essentiels du dispositif selon l'invention,
- la figure 2 est un schéma symbolique équivalent au schéma de la figure 1,
- la figure 3 représente le schéma des circuits d'asservissement du palier magnétique de support de l'anneau de compensation du dispositif de la figure 1,
- la figure 4 est une vue de détail en coupe montrant un exemple de mode de réalisation des moyens de support mécanique et magnétique de l'anneau de compensation du dispositif de la figure 1, et
- la figure 5 est une vue schématique montrant les éléments essentiels du dispositif selon l'invention, selon une variante de réalisation du dispositif de la figure 1.

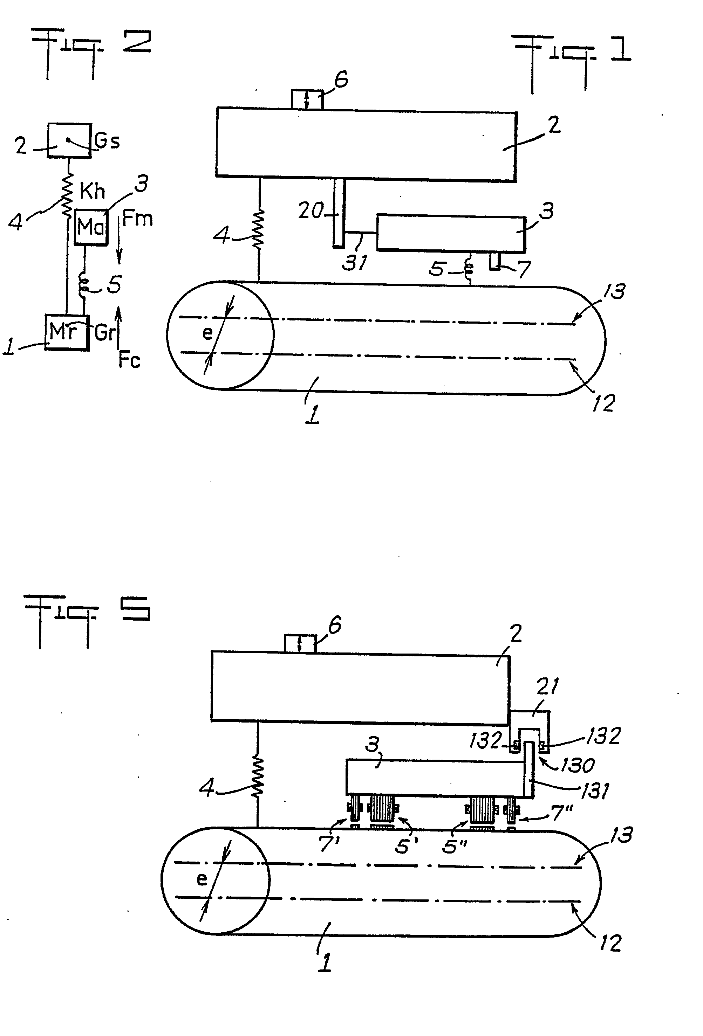

On a représenté de façon schématique sur la figure 1 les éléments constitutifs essentiels d'une machine tournante qui comprend un rotor 1 monté à l'intérieur d'un bâti 2 à l'aide d'au moins un palier fluide 4, qui peut être un palier à gaz ou un palier à huile et en particulier peut être du type hydrodynamique. Dans la suite de la description, on considérera ce dernier cas à titre d'exemple. La ligne en traits mixtes 12 représente l'axe d'inertie du rotor 1, qui est distinct de l'axe géométrique du rotor 1 et présente par rapport à l'axe 13 (également représenté en traits mixtes) du palier hydrodynamique 4 un excentrement e.

En l'absence de tout dispositif de compensation, le palier hydrodynamique 4 transmet au bâti 2 une force Fh proportionnelle à la raideur Kh du palier hydrodynamique 4 et à l'excentrement e susdéfini.

Comme on peut le voir sur la figure 1, un anneau de compensation 3 est interposé entre le rotor 1 et le bâti 2 et vise à compenser, par un mouvement d'oscillation circulaire, la force engendrée sur le rotor 1 par le palier hydrodynamique, et par là-même à éviter la transmission de forces perturbatrices au bâti 2. La force de compensation créée sur le rotor 1 par l'anneau 3 est exercée par l'intermédiaire d'au moins un palier magnétique actif radial 5, qui est asservi à partir d'une part de signaux délivrés par un détecteur de position 7 détectant la position du rotor 1 par rapport à l'anneau 3, d'autre part, des signaux délivrés par des détecteurs de vibration 6 disposés sur le bâti 2. Dans le mode de réalisation de la figure 1, des tiges 31 présentant une faible raideur dans le sens radial servent à maintenir axialement l'anneau 3 dans une position prédéterminée par rapport à un support 20 solidaire du bâti 2.

La configuration du dispositif selon l'invention a pour but d'atteindre l'immobilité du bâti 2 en annulant les forces émises par le rotor 1.

Le rotor 1, qui n'est relié au bâti que par un palier hydrodynamique 4, tourne autour de l'axe 13 de ce palier.

La force tournante engendrée sur le rotor 1 est donc la force centrifuge Fc due au balourd du rotor 1, qui est telle que :

$$Fc = (2\pi f)^2 \, e \, Mr \quad (1)$$

où:

f représente la fréquence liée à la vitesse de rotation du rotor,

e représente l'excentrement dû au balourd, c'est-à-dire la distance entre l'axe de rotation du rotor et l'axe d'inertie du rotor, et

Mr représente la masse du rotor.

Les circuits d'asservissement du palier magnétique radial 5 coopèrent avec les détecteurs 6 et 7 de telle sorte que l'anneau de compensation 3 fournisse, grâce au palier magnétique 5, une force tournante Fm égale à la force Fc, mais déphasée de 180° par rapport à cette dernière.

L'anneau de compensation 3 fait alors un mouvement d'oscillation circulaire avec une amplitude $r_a$ telle que

$$r_a = e \, . \, (Mr/Ma) \quad (2)$$

où :

e représente la distance entre l'axe de rotation 13 du rotor 1 et l'axe d'inertie 12 de celui-ci,

Mr représente la masse du rotor 1, et

Ma représente la masse de l'anneau de compensation 3.

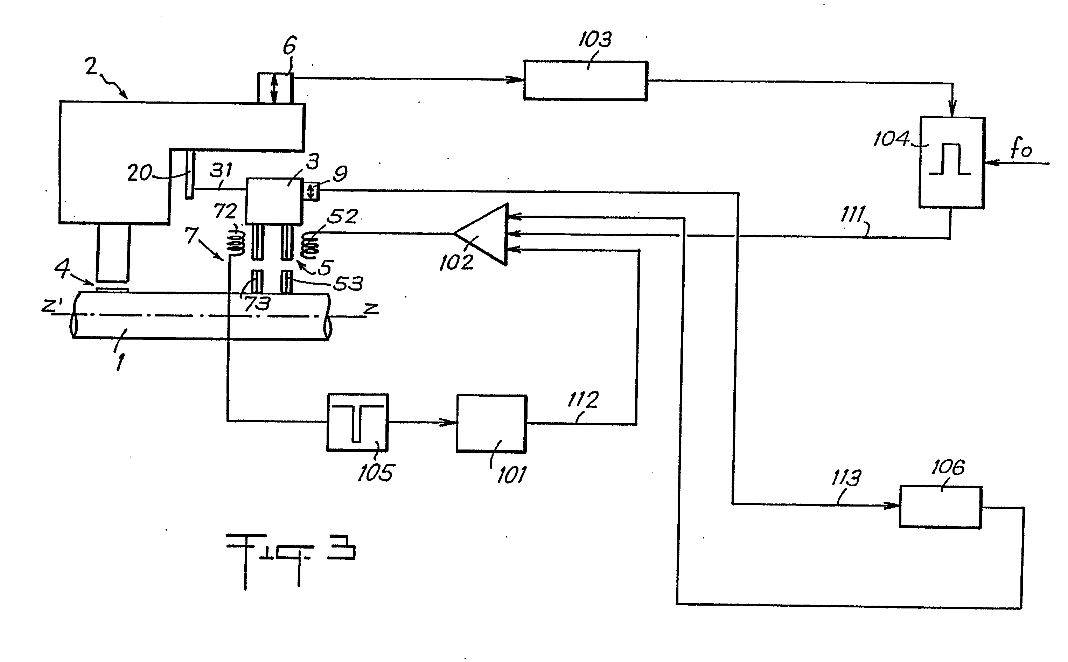

La figure 2 montre de façon symbolique la compensation entre la force Fc créée sur le rotor 1 (dont le centre de gravité est Gr) du fait du balourd de celui-ci et des contraintes exercées par le palier hydrodynamique 4 et la force Fm créée par l'anneau de compensation 3 et le palier magnétique 5 pour compenser le balourd directement sur le rotor 1.

Sur la figure 2, Gs représente le centre de gravité du bâti 2 considéré comme indéformable. On voit que, malgré la présence d'un palier hydrodynamique 4 de raideur Kh, aucune force dynamique n'est exercée par le palier 4 sur le bâti 2, ce qui répond bien au problème posé.

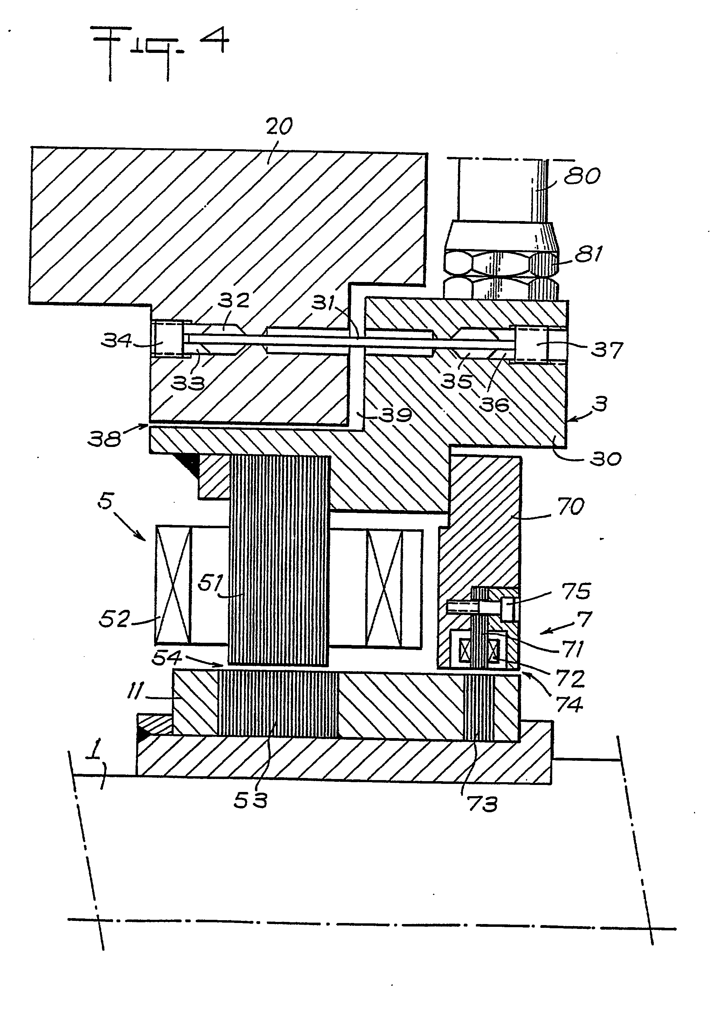

On décrira maintenant de façon plus détaillée en référence la figure 3 les circuits d'asservissement du palier magnétique actif 5 qui maintient l'anneau de compensation 3 dans une position flottante par rapport au rotor 1 tout en produisant les forces dynamiques antagonistes aux forces du balourd créées par la présence du palier hydrodynamique ou d'autres pseudo-paliers tels que des joints d'étan-chéité par exemple.

Les détecteurs de vibration 6 placés sur le bâti de la machine sont constitués par des accéléromètres ou des détecteurs de vitesse et comprennent au moins deux détecteurs dont les axes de sensibilité sont orientés selon deux directions X'X et Y'Y perpendiculaires entre elles et perpendiculaires à l'axe ZZ' du rotor 1.

On n'a représenté sur la figure 3 que les boucles d'asservissement correspondant à la direction X'X qui servent à commander le courant circulant dans les enroulements 52 du palier magnétique 5 qui agissent selon la direction X'X. Des boucles d'asservissement tout-à-fait similaires sont utilisées pour commander le courant circulant dans les enroulements 52 du palier 5 qui agissent selon la direction Y'Y, à partir de détecteurs dont l'axe de sensibilité est orienté selon la direction Y'Y.

Les signaux issus des détecteurs de vibration 6 sont appliqués à des circuits intégrateurs 103 qui effectuent une simple intégration, si les détecteurs 6 sont des capteurs de vitesse, ou une double intégration si les détecteurs 6 sont des accéléromètres.

Les signaux issus du circuit intégrateur 103 sont ensuite appliqués à un filtre passe-bande 104 centré sur une fréquence de rotation fo . La fréquence fo peut correspondre à la fréquence de rotation f du rotor 1 si les vibrations auxquelles est soumis le bâti 2 en l'absence d'anneau 3 proviennent essentiellement de la présence du palier hydrodynamique 4 en tant que tel. Toutefois, d'autres éléments annexes portés par le rotor 1 tels que des joints d'étanchéité, peuvent se comporter comme des pseudo-paliers et peuvent créer des perturbations à des fréquences 2f, 3f... harmoniques de la fréquence de rotation du rotor 1. On procède avantageusement, dans un premier temps, à l'aide d'un analyseur de spectre, à partir des signaux fournis par les détecteurs de vibration 6, au recensement des fréquences de vibration stables dans le temps qui en principe correspondent à un multiple f, 2f, 3f de la vitesse de rotation du rotor, pour ensuite utiliser des filtres 104 centrés sur des fréquences fo cor-respondant aux fréquences précédemment repé-rées par analyse de Fourier.

Les détecteurs de vibration 6 servent ainsi à commander la compensation des vibrations répétitives naissant au niveau du rotor 1 et qui, en l'absence d'anneau de compensation 3, se répercutent sur le bâti 2.

La boucle d'asservissement 111, qui comprend essentiellement un détecteur de vibration 6, un circuit intégrateur 103, un filtre passe-bande 104 et un amplificateur 102 d'alimentation des enroulements 52 d'électroaimants du palier 5, constitue une boucle de contre-réaction sélective à bande étroite et à grand gain qui permet à l'anneau 3 d'osciller de façon à compenser de façon dynamique les forces perturbatrices créées au niveau du rotor 1. Dans la boucle d'asservissement 111, on a représenté un simple amplificateur de sortie 102 mais celui-ci peut naturellement être associé de façon classique à des circuits déphaseurs pour alimenter des enroulements 52 diamétralement opposés disposés selon une même direction X'X ou Y'Y.

La position statique de l'anneau 3 par rapport au rotor 1 est commandée à l'aide d'une boucle de contre-réaction 112 classique qui reçoit les signaux délivrés par un détecteur 7 détectant la position du rotor 1 par rapport à l'anneau 3. Le détecteur 7 peut être de type inductif et comprend des éléments de détection de position orientés selon les deux directions perpendiculaires X'X et Y'Y. Chacune des deux boucles de contre-réaction 112 qui effectuent l'asservissement en position de l'anneau 3 selon les directions X'X et Y'Y comprend un réseau connecteur 101 de traitement de signal par exemple du type PID, c'est-à-dire à action proportionnelle, intégrale et dérivée. Les signaux issus du réseau correcteur 101, auquel est en principe associé un linéarisateur sont appliqués à l'amplificateur sommateur 102.

Un réseau 105 d'équilibrage automatique du rotor 1 peut être incorporé dans la boucle d'asservissement 112 afin d'éviter que le détecteur de position 7 transmette au palier magnétique 5 un signal d'erreur lié à l'excentricité entre l'axe du détecteur de position 7 et l'axe de rotation défini par le palier hydrodynamique 4. Le réseau d'équilibrage automatique 105 peut être réalisé par exemple de la manière décrite dans le brevet US-A-4 121 143. L'utilisation d'un détecteur de position 7 de bonne qualité, par exemple un détecteur inductif du type décrit dans le brevet US-A-4 114 960, et la mise en oeuvre d'un réseau d'équilibrage automatique 105 garantissent que le détecteur 7 de la position statique de l'anneau 3 par rapport au rotor 1 n'introduit pas de perturbations par rapport à la boucle d'asservissement dynamique 111.

Selon une variante de réalisation possible, l'an-neau de compensation 3 est suspendu de façon spatiale, c'est-à-dire présente une position par rapport au rotor 1 qui, pour les écarts aux basses fréquences est déterminé par le détecteur de position 7 et, pour des écarts à des fréquences plus élevées, est déterminé à partir de détecteurs de vibration 9 (accéléromètres ou détecteurs de vitesse) qui sont placés sur l'anneau 3 et présentent des axes de sensibilité perpendiculaires à l'axe du rotor 1. Les signaux issus des détecteurs de vibration 9 après une double ou une simple intégration sont appliqués, par l'intermédiaire d'un réseau correcteur 106 à action proportionnelle et dérivée, à l'amplificateur sommateur 102 alimentant les enroulements 52. Pour chaque axe d'asservissement X'X ou Y'Y, on associe ainsi une boucle supplémentaire de contre-réaction 113 la boucle de contre-réaction 112 qui reçoit les signaux du détecteur 7. Dans ce cas, la boucle d'asservissement 111, continue de jouer un rôle, en ce qui concerne les effets dynamiques, pour commander en force le palier magnétique 5 de l'anneau flottant 3 et produire sur le rotor 1 un couple de compensation qui évite l'apparition d'un couple au niveau du bâti 2 et tend à limiter au maximum les vibrations détectées par les détecteurs 6.

La figure 4 montre de façon plus détaillée un exemple d'agencement de l'anneau de compensation 3 par rapport au bâti 2 et au rotor 1.

Le corps 30 de l'anneau de compensation 3 supporte une armature feuilletée 51 qui constitue, avec des enroulements 52, le stator du palier magnétique radial 5. Le rotor 1 porte lui-même à sa périphérie un anneau 11 qui incorpore une armature rotorique feuilletée 53 disposée en regard de l'armature de stator 51 en définissant un entrefer 54 qui peut être par exemple de l'ordre du millimètre.

Le détecteur de position 7, de type inductif, présente lui-même une armature feuilletée 71, autour de laquelle sont enroulés des bobinages 72, et qui fait face, en ménageant un entrefer 74, à une armature annulaire feuilletée 73 montée dans l'anneau 11 solidaire du rotor 1. L'armature 71 du détecteur 7 est fixée par des moyens de liaison 75 à un support 70 solidaire du corps 30 de l'anneau de compensation 3. La surface de référence de l'armature annulaire 73 doit naturellement présenter un très bon état de surface pour ne pas apporter de perturbations dans les mesures et le détecteur 7 dans son ensemble est disposé à proximité immédiate du palier magnétique 5, lui-même situé au voisinage du palier hydrodynamique 4 dont les effets perturbateurs sont à compenser.

Les câbles d'alimentation des enroulements 52 du palier 5 et de liaison entre les enroulements 72 du détecteur 7 et les circuits d'asservissement sont guidés dans un conduit souple 80 fixé sur l'anneau 3 par un raccord 81.

Sur la figure 4, on voit une tige 31 disposée parallèlement à l'axe du rotor 1 et reliant l'anneau de compensation 3 à une pièce 20 solidaire du bâti 2. La tige de liaison 31, qui est rigide dans le sens axial, mais présente une faible raideur dans le sens radial a pour rôle d'éviter des déplacements axiaux de l'anneau de compensation 3 ainsi qu'une mise en rotation de celui-ci autour du rotor. La tige 31 destinée essentiellement à encaisser des chocs passagers peut présenter un faible diamètre, de l'ordre du millimètre ou de quelques millimètres, et constitue une suspension de fréquence propre faible par rapport à la vitesse de rotation du rotor. La fréquence propre de la suspension par tiges 31 peut ainsi être de l'ordre de 5Hz pour une fréquence de rotation du rotor de 50Hz. Afin d'éviter des torsions, il est avantageux d'utiliser au moins trois, et de préférence six à douze tiges 31 parallèles réparties autour du rotor 1 pour relier l'anneau 3 au bâti 2. Les tiges de liaison peuvent être fixées par différents systèmes mécaniques, par exemple, par des vis 34 agissant par l'intermédiaire de pièces métalliques 33 pour immobiliser des pièces d'amortissement 32, par exemple, en matière plastique disposées autour de la tige 31. Comme on peut le voir sur la figure 4, les fixations sur la pièce fixe 20 et sur l'anneau oscillant 3 peuvent être identiques.

L'espace libre 38 ménagé radialement entre le support 20 de l'anneau 3 et l'anneau 3 peut être du même ordre de grandeur que l'entrefer 54 du palier magnétique 5, c'est-à-dire de l'ordre du millimètre. On notera que lorsque le rotor 1 se déplace radialement de quelques micromètres, l'anneau de compensation 3 peut lui-même présenter un déplacement plus important, de l'ordre de quelques centièmes ou quelques dixièmes de millimètre, de sorte que la masse de l'anneau de compensation 3 peut ne représenter qu'un relativement faible pourcentage de la masse du rotor 1.

Dans les exemples des figures 1 et 4, on a considéré le cas d'un anneau de compensation 3 supporté par un palier magnétique actif radial 5 et retenu axialement par des moyens mécaniques 31. Il est toutefois possible, comme représenté schématiquement sur la figure 5, d'utiliser un anneau de compensation 3 flottant supporté exclusivement par des moyens magnétiques avec cinq degrés de liberté. Dans ce cas, l'anneau 3 peut être supporté radialement par rapport au rotor 1 par deux paliers magnétiques radiaux 5', 5" semblables au palier magnétique 5 des figures 1 et 4 et coopérant chacun avec un détecteur radial 7', 7" semblable au détecteur 7 des figures 1 et 4. Les paliers radiaux 5', 5" sont naturellement également asservis chacun à partir des signaux délivrés par les détecteurs de vibration 6, comme dans le cas de la figure 3. Une butée axiale magnétique 130 comprenant une armature 131 solidaire de l'anneau 3 et des enroulements d'électroaimant 132 montés sur un support 21 solidaire du bâti 2, et coopérant avec l'armature 131, sert à maintenir l'anneau 3 et se substitue dans ce cas aux tiges de liaison 31 du mode de réalisation des figures 1 et 4.

Dans ce qui précède, on a considéré le cas où l'anneau de compensation 3 monté par rapport au rotor à l'aide de moyens magnétiques ne sert qu'à compenser des effets dûs à la présence d'un balourd sur le rotor 1. Or, la combinaison d'un anneau de compensation 3 et d'un palier fluide 4 est avantageuse à d'autres titres car elle permet de limiter sur le bâti 2 des vibrations provenant d'autres causes que la seule présence d'un balourd.

Ainsi, dans le cas d'un arbre long 1 supporté par au moins trois paliers fluides 4, même si l'arbre 1 ne présente pas de balourd, il n'est en pratique pas possible de disposer les portées des différents paliers rigoureusement selon le même axe. Il se produit alors au niveau de chaque palier 4 un effet vilebrequin. Au total, les effets vilebrequin dûs aux différents paliers 4 s'annulent, mais engendrent sur le bâti 2 des efforts de flexion créés par chacun des paliers fluides 4 qui tendent à redresser l'arbre 1 pour amener en alignement les portées initialement désaxées, c'est-à-dire non concentriques. Ceci contribue à créer sur le bâti 2 des vibrations nuisibles.

La présence d'anneaux de compensation 3 associés à chaque palier fluide 4 et montés sur l'arbre 1 à l'aide de paliers magnétiques actifs 5 permet de prendre en compte les différents effets vilebrequin créés et de compenser ceux-ci en agissant sur l'arbre de manière à redresser celui-ci pour amener les différentes portées des paliers fluides 4 en alignement les unes avec les autres sans agir sur les paliers fluides, donc sans créer de vibrations sur le bâti 2.

A titre d'exemple, on peut considérer un arbre 1 dont la longueur est de 5 m, le diamètre est de 200 mm, la masse sans équipement est de 1 000 kg, la masse avec des équipements est de 4 000 kg, et la vitesse de rotation est de 100 Hz.

Si l'excentricité de fabrication de chaque portée d'un palier fluide est de 100 micromètres et si la raideur de flexion est de 10 N par micromètre, la force nécessaire pour redresser l'arbre est de 1 000 N. Si cette force est exercée par des paliers fluides classiques sans anneau de compensation, des vibrations nuisibles sont automatiquement engendrées sur le bâti de la machine et les efforts à exercer, qui sont liés à la raideur des paliers fluides (qui peut être de 500 N par micromètre) sont très élevés. En revanche, si des anneaux de compensation 3 tels que ceux décrits en référence aux figures 1 et 3 à 5 sont combinés avec les différents paliers fluides, il est possible d'assurer une mise en alignement des portées des différents paliers fluides avec une faible énergie tout en minimisant les réactions sur le bâti.

Dans le cas de l'exemple sus-visé d'un excentrement de 100 micromètres pour un arbre 1 tournant à une vitesse de 100 Hz, un anneau de compensation 3 d'une masse par exemple de 100 kg peut osciller avec une amplitude de 25 micromètres pour compenser l'effet de vilebrequin créé par le palier fluide dont la portée est excentrée de 100 microns.

Si un arbre long est suspendu par un palier fluide central et deux paliers fluides d'extrémité, des anneaux de compensation 3 de masses différentes peuvent être associés aux différents paliers. Ainsi, la masse de l'anneau de compensation associé au palier fluide central peut être le double de la masse de chacun des anneaux de compensation associés aux paliers fluides d'extrémité.

## Revendications

1. Dispositif électromagnétique de réduction des vibrations dans une machine tournante comprenant un rotor (1) monté par l'intermédiaire d'au moins un palier fluide (4) à l'intérieur d'un bâti (2), caractérisé en ce qu'il comprend au moins un anneau de compensation (3) placé au voisinage du palier fluide (4) et monté par rapport au rotor (1) à l'aide d'au moins un palier magnétique actif radial (5) dont les enroulements (52) d'électro-aimants sont alimentés en fonction d'une part des signaux délivrés par un détecteur (7) de la position de l'anneau de compensation (3) par rapport au rotor (1) et d'autre part des signaux délivrés par au moins deux détecteurs de vibration (6) disposés sur le bâti (2) de la machine et présentant des axes de sensibilité non parallèles perpendiculaires à l'axe du rotor (1), en ce que les signaux délivrés par les détecteurs de vibration (6) sont appliqués à une chaîne de contre-réaction sélective à bande étroite et à grand gain dont la fréquence centrale est synchronisée avec une fréquence de référence (fo) et qui comprend des moyens (103) pour intégrer les signaux issus des détecteurs de vibration (6) et des moyens de filtrage (104) pour supprimer les signaux transitoires dont la fréquence n'est pas liée à la fréquence de référence (fo), de telle sorte que l'anneau de compensation (3) exerce sur le rotor (1) par l'intermédiaire du palier magnétique radial (5) une force tournante de compensation égale à la force centrifuge due au balourd générée sur le rotor (1) mais en présentant un déphasage de 180° par rapport à cette dernière.

2. Dispositif selon la revendication 1, caractérisé en ce que la masse de l'anneau de compensation (3) est très inférieure à la masse du rotor (1) et de préférence de l'ordre de quelques pour cents de celleci.

3. Dispositif selon la revendication 1 ou la revendication 2, caractérisé en ce qu'il comprend au moins trois tiges de liaison (31) parallèles l'axe du rotor (1) et présentant une grande raideur axiale pour relier l'anneau de compensation (3) au bâti (2).

4. Dispositif selon la revendication 3, caractérisé en ce que les tiges de liaison (31) présentent un faible diamètre, de l'ordre de quelques millimètres, de façon à présenter une raideur radiale négligeable par rapport à celle du palier magnétique actif (5), et à présenter une fréquence propre très inférieure à la vitesse de rotation du rotor.

5. Dispositif selon l'une quelconque des revendications 1 à 4, caractérisé en ce que la fréquence de référence (fo) est déterminée par analyse de Fourier.

6. Dispositif selon l'une quelconque des revendications 1 à 5, caractérisé en ce qu'il comprend en outre au moins deux capteurs de vibration (9) à axes non parallèles entre eux et perpendiculaires à l'axe du rotor (1), disposés sur l'anneau de compensation (3), en ce que les signaux délivrés par ces détecteurs de vibration (9) sont appliqués à une chaîne de contre-réaction comprenant des réseaux (106) d'action proportionnelle et dérivée et reliée aux enroulements (52) d'électroaimants du palier magnétique actif (5) et en ce que la chaîne de contre-réaction reliant le détecteur (7) de détection de la position de l'anneau de compensation (3) aux enroulements (52) d'électroaimants du palier magnétique actif (5) comprend un simple réseau d'action intégrale (101).

7. Dispositif selon l'une quelconque des revendications 1 à 6, caractérisé en ce que la chaîne de contre-réaction reliant le détecteur (7) de détection de la position de l'anneau de compensation (3) aux enroulements (52) d'électro-aimants du palier magnétique actif (5) et déterminant la position statique de l'anneau(3) comprend un circuit (105) d'équilibrage automatique du rotor (1) créant un "trou" de gain centré sur une fréquence fonction directe de la vitesse de rotation du rotor.

8. Dispositif selon l'une quelconque des revendications 1 à 7, caractérisé en ce que les détecteurs de vibration (6 et 7) sont constitués par des accéléromètres ou des capteurs de vitesse.

9. Dispositif selon la revendication 1, caractérisé en ce qu'il comprend un anneau de compensation (3) monté par rapport au rotor (1) à l'aide de deux paliers magnétiques actifs radiaux (5) et coopérant par rapport au bâti (1) à l'aide d'un palier magnétique axial actif.

## Claims

1. Electromagnetic device for reducing vibration in a rotary machine comprising a rotor (1) mounted in a casing (2) via at least one fluid bearing (4), characterized in that it comprises at least one compensation ring (3) disposed in the vicinity of the fluid bearing (4) and mounted relative to the rotor (1) by means of an active radial magnetic bearing (5) of which the electromagnetic bearings (52) are fed as a function, firstly of a position detector (7) for detecting the position of the compensation ring (3) relative to the rotor (1) and secondly of signals delivered by at least two vibration detectors (6) disposed on the casing (2) of the machine and having non-parallel axes of sensitivity which are perpendicular to the axis of the rotor (1), in that the signals delivered by the vibration detectors (6) are applied to a high-gain narrow-band selective feedback circuit having a central frequency synchronized with a reference frequency (fo) and including means (103) for integrating the signals from the vibration detectors (6) and filter means (104) for eliminating transient signals whose frequency is not related to the reference frequency (fo), in such a way that the compensation ring (3) exerts on the rotor (1) via the radial magnetic bearing (5) a rotary compensation force equal to the centrifugal force due to the out-of-balance mass of the rotor (1) but being phase-shifted by 180° relative thereto.

2. Device according to claim 1, characterized in that the mass of the compensation ring (3) is much less than the mass of the rotor (1), and is preferably of the order of a few percent thereof.

3. Device according to claim 1 or 2, characterized in that it comprises at least three connection rods (31) running parallel to the rotor axis (1) and having a high degree of axial stiffness, for connecting the compensation ring (3) to the casing (2).

4. Device according to claim 3, characterized in that the connection rods (31) are of small diameter, of the order of a few millimeters, so as to present negligible radial stiffness compared with the stiffness of the active magnetic bearing (5), and to have a resonant frequency which is much less than the speed of rotation of the rotor.

5. Device according to any one of claims 1 to 4, characterized in that the reference frequency (fo) is determined by Fourier analysis.

6. Device according to any one of claims 1 to 5, characterized in that it further comprises at least two vibration sensors (9) having mutually non-parallel axes both perpendicular to the axis of the rotor (1), disposed on the compensation ring (3), in that the signals delivered by these vibration detectors (9) are applied to a feedback circuit comprising proportional and derivative networks (106) and connected to the windings (52) of the electromagnets of the active magnetic bearing (5), and in that the feedback circuit connecting the position detector (7) for detecting the position of the compensation ring (3) to the electromagnetic windings (52) of the active magnetic bearing (5) comprises a single integral action network (101).

7. Device according to any one of claims 1 to 6, characterized in that the feedback circuit connecting the position detector (7) for detecting the position of the compensation ring (3) to the electromagnetic windings (52) of the active magnetic bearing (5) and determining the static position of the ring (3) comprises a circuit (105) for automatically balancing the rotor (1) by creating a gain "hole" centered on a frequency which is a direct function of the speed of rotation of the rotor.

8. Device according to any one of claims 1 to 7, characterized in that the vibration detectors (6 and 7) are constituted by accelerometers or speed sensors.

9. Device according to claim 1, characterized in that it comprises a compensation ring (3) mounted relative to the rotor (1) by means of two active radial magnetic bearings (5) and co-operating with the casing (1) by means of an active axial magnetic bearing.

## Patentansprüche

1. Elektromagnetische Vorrichtung zur Reduktion der Vibrationen einer drehenden Maschine, welche einen Rotor (1) aufweist, der vermittels zumindest eines Flüssigkeitslagers (4) am Inneren eines Gestells (2) befestigt ist, gekennzeichnet durch zumindest einen Kompensationsring (3), der in der Nähe des Flüssigkeitslagers (4) angebracht ist und der in bezug auf den Rotor (1) mit Hilfe zumindest eines aktiven radialen Magnetlagers (5) montiert ist, dessen Wicklungen (52) der Elektromagneten als Funktion eines Teils von Signalen, die von einem Detektor (7) geliefert werden, der in bezug auf den Rotor (1) dieselbe Position wie der Kompensationsring (3) einnimmt, und einem anderen Teil von Signalen, die von zumindest zwei Vibrationsdetektoren (6) geliefert werden, die an dem Rahmen (2) der Maschine angebracht sind und die Detektionsachsen aufweisen, die nicht parallel oder rechtwinklig zur Achse des Rotors (1) sind, versorgt werden, und dadurch, daß die von den Vibrationsdetektoren (6) gelieferten Signale in einer Gegenkopplungsschleife geringer Bandbreite und großer Verstärkung verwendet werden, deren Mittenfrequenz mit einer Referenzfrequenz (fo) synchronisiert ist und die Mittel (103) zur Integration der von den Vibrationsdetektoren (6) ausgegebenen Signale aufweist sowie Filter (104), um die Transistorsignale zu unterdrücken, deren Frequenz nicht um die Referenzfrequenz (fo) herum liegt, derart, daß der Kompensationsring (3) in dem Rotor (1) mittels des radialen Magnetlagers (5) eine umlaufende Kompensationskraft erzeugt, die gleich der wegen der Unwucht von dem Rotor (1) erzeugten Zentrifugalkraft ist, die aber in bezug auf die letztgenannte eine Phasenverschiebung von 180° aufweist.

2. Vorrichtung nach Anspruch 1, dadurch gekennzeichnet, daß die Masse des Kompensationsrings (3) sehr klein in bezug auf die Masse des Rotors (1) ist und vorzugsweise in der Größenordnung von einigen Prozent derselben liegt.

3. Vorrichtung nach Anspruch 1 oder 2, gekennzeichnet durch zumindest drei Verbindungsstangen (31), die parallel zur Achse des Rotors (1) sind und eine große axiale Steifigkeit aufweisen, um den Kompensationsring (3) am Rahmen (2) zu befestigen.

4. Vorrichtung nach Anspruch 3, dadurch gekennzeichnet, daß die Verbindungsstangen (31) einen kleinen Querschnitt in der Größenordnung einiger Millimeter aufweisen, derartig, daß sie eine radiale Steifigkeit aufweisen, die gegenüber der des aktiven Magnetlagers (5) vernachlässigbar ist, und eine Eigenfrequenz hat, die wesentlich kleiner als die Rotationsgeschwindigkeit des Rotors ist.

5. Vorrichtung nach einem der Ansprüche 1 bis 4, dadurch gekennzeichnet, daß die Referenzfrequenz (fo) durch eine Fourier-Analyse bestimmt wird.

6. Vorrichtung nach einem der Ansprüche 1 bis 5, gekennzeichnet durch außerdem zumindest zwei Schwingungsfühler (9), deren Achsen nicht zueinander parallel und rechtwinklig zur Achse des Rotors (1) sind und die auf dem Kompensationsring (3) angebracht sind, und dadurch, daß die von diesen Schwingungsmeßfühlern (g) gelieferten Signale in einer Gegenkopplungsschleife verwendet werden, die lineare Netzwerke (106) aufweist, welche mit den Wicklungen (52) der Elektromagneten des aktiven Magnetlagers (5) verbunden und von diesen abgeleitet sind, und dadurch, daß die Gegenkopplungsschleife, die den Detektor (7) zur Detektion der Position des Kompensationsringes (3) mit der Wicklung (52) des Elektromagneten des aktiven Magnetlagers (5) verbindet, ein einfaches, integrierendes Netzwerk (101) aufweist.

7. Vorrichtung nach einem der Ansprüche 1 bis 6, dadurch gekennzeichnet, daß die Gegenkopplungsschleife, die den Detektor (7) zur Detektion der Position des Gegenkopplungsringes (3) mit den Wicklungen (52) der Elektromagneten des aktiven Magnetlagers (5) verbindet und die die statische Position des Ringes (3) bestimmt, einen Schaltkreis (105) zur automatischen Auswuchtung des Rotors (1) aufweist, welcher ein Verstärkungs- "Loch" an einer Frequenz erzeugt, die eine direkte Funktion der Rotationsgeschwindigkeit des Rotors ist.

8. Vorrichtung nach einem der Ansprüche 1 bis 7, dadurch gekennzeichnet, daß die Vibrationsdetektoren (6 und 7) aus Beschleunigungsmessern oder Geschwindigkeitsmeßfühlern aufgebaut werden.

9. Vorrichtung nach Anspruch 1, gekennzeichnet durch einen Kompensationsring (3), der in bezug auf den Rotor (1) mit Hilfe zweier aktiver radialer Magnetlager (5) montiert ist und der in bezug auf den Rahmen (1) mit Hilfe eines axialen aktiven Magnetlagers wirkt.

Fig. 2

Fig. 1

Fig. 5

Fig. 3

Fig. 4